# EUROPEAN PATENT SPECIFICATION

(11) **EP 1 672 762 B1**
(45) Date of publication and mention of the grant of the patent: **20.02.2013**
(21) Application number: 04425927.3
(22) Date of filing: 17.12.2004
(51) Int. Cl.: H02J 1/14, H02J 3/14

(54) **Regulator of the power supplied to electric loads of industrial processes**
Regler der an elektrische Lasten der industriellen Prozesse gelieferte Energie
Régulateur de puissance fournie par des charges électriques de processus industriels

(43) Date of publication of application: 21.06.2006
(73) Proprietor: Gefran S.p.A., 25050 Provaglio d'Iseo (Brescia) (IT)
(72) Inventor: Cornali, Maurizio, 25050 Provaglio d'Iseo (Brescia) (IT); Baga, Fabio, 25050 Provaglio d'Iseo (Brescia) (IT)
(74) Representative: Leihkauf, Steffen Falk

(56) References cited:
- US-A- 5 384 490
- US-A1- 2002 006 027
- US-B1- 6 269 000

## Description

### Field of application

The present invention relates to a regulator of the power supplied to industrial process electric loads wherein the component configuration achieves a higher versatility in the use and control of variable electric loads having a different variation cycle from each other.

More precisely, the invention relates to the configuration of the power regulator for industrial process electric loads wherein the load variability requires the power regulator itself to be sized with a load capacity corresponding to the highest capacity achievable by the respective electric load. The power regulator device is of the type intended to be mounted on a control board or panel associated to the process management machine.

### Prior art

As it is well known to the skilled in the art, power regulators for industrial process electric loads comprise a power module and a control module, for controlling one or more resistors with a heating/cooling logic depending on the type of load to be managed.

In particular, in the plastic material working machine field, it is often necessary to provide regulator devices of the resistor heating power in order to precisely thermoregulate the temperature in the plastic material melting areas and in the mould areas wherein the plastic material configuration occurs. Said regulators of the power supplied to electric loads are associated in the machine control boards side by side assembled in tens of devices by skilled personnel.

It is known in the art that the power module comprises a solid-state switching relay associated to a heat dissipator and the control module comprises a Programmed Logic Controller or PLC, which attends to controlling the load switching relay.

The switching-generated heat is dissipated by means of a dissipator while the adjacent PLCs and/or regulators are interconnected by means of a data bus allowing the communication between said regulators, for a specific and controlled machine programming.

Moreover the different sensors being required for the industrial process correct operation refer to said control module; these sensors are connected to the PLC or control module of the power regulator they refer to.

Electric load power regulator embodiments, which also comprise, besides the data bus, power electric connections for the main electric line or for an auxiliary electric line, are also known, in the prior art.

Nevertheless, when different loads having a power varying in time are to be controlled, it is known in the art to set the power regulators with a highest threshold corresponding to the highest power that such specific load can require. From this approach it results that the power regulators are all sized for the highest suppliable power even when the respective loads do not require the use thereof. It results that the power modules of each regulator are sized for the highest suppliable power, subsequently having a corresponding relay at the suitable power solid state. In order to determine the module dimensions, the sizing of the corresponding switching-generated-heat dissipator is even more relevant, being just sized for the highest suppliable power.

Furthermore, control modules do not undergo size variations with the controlled power so that the regulator dimensions are primarily represented by the dissipator size. Several adjacent power regulators in the control board rack have obviously a considerable area occupation for the heat dissipator size.

US 6,269,000 B1 discloses a space saving enclosure casing for power electrical components. US 2002/0006027 discloses an arrangement of discrete heat generating components along a cooling air flow path, so that all components have approximately equal thermal safety margins.

The technical problem underling the present invention is to arrange the elements composing the power regulators so that several regulators can be put side by side in the control board reducing the dimension, obviously for the same performances.

Another aim of the invention is to reduce the production and maintenance costs of the electric load power regulator, both during the installation and in the following maintenance.

### Summary of the invention

This and the other aims are achieved according to the present invention by a regulator according to claim 1.

The features and advantages of the present invention will be apparent from the following description of an embodiment thereof given.

### Brief description of the drawings

- Figure 1 is a block diagram of the elements composing the regulator of the power supplied to electric loads according to the invention;
- Figure 2 is a perspective view from the above of the power regulator from the side of the electric load connection terminal board;
- Figure 3 is a perspective view from the above from the side of the aeration fan;
- Figure 4 is a sectional view of the power regulator according to the invention;
- Figure 5 is a power supply diagram for electric loads having a balanced absorption;
- Figure 6 is a similar diagram to the previous figure, but with electric loads having a different power absorption.

### Detailed description of a preferred embodiment

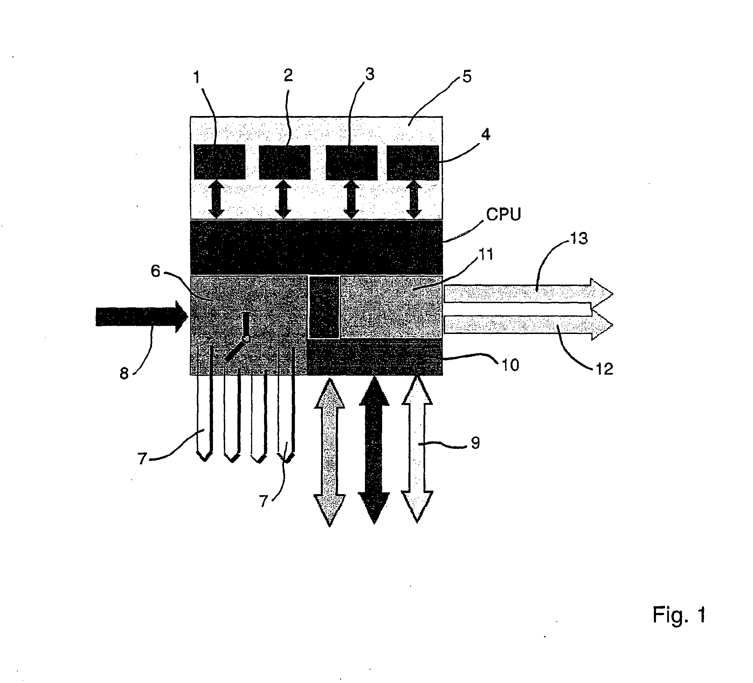

With reference to these drawings, and particularly to the block diagram of figure 1, the power modules 1, 2, 3, 4 are shown, comprising each a solid state relay, but all physically associated to the same dissipator 5.

These relays are electrically controlled by the central logic unit CPU, which receives input electric signals coming from a plurality of sensors 7.

The logic unit CPU also receives analogue/digital supplied power data from a sensing board 15, being described hereafter, and by means of timed input connections 6 it reads at regular intervals the signals detected by the sensors 7.

A single control module CPU is interconnected by means of a logic connection bus 8 and 9 to an external industrial process control processor by means of a network interface 10.

The central unit CPU also provides a plurality of output data gates 11 with digital alarm signals 12 and digital control outputs 13, being configurable according to the function (for example for the cooling control).

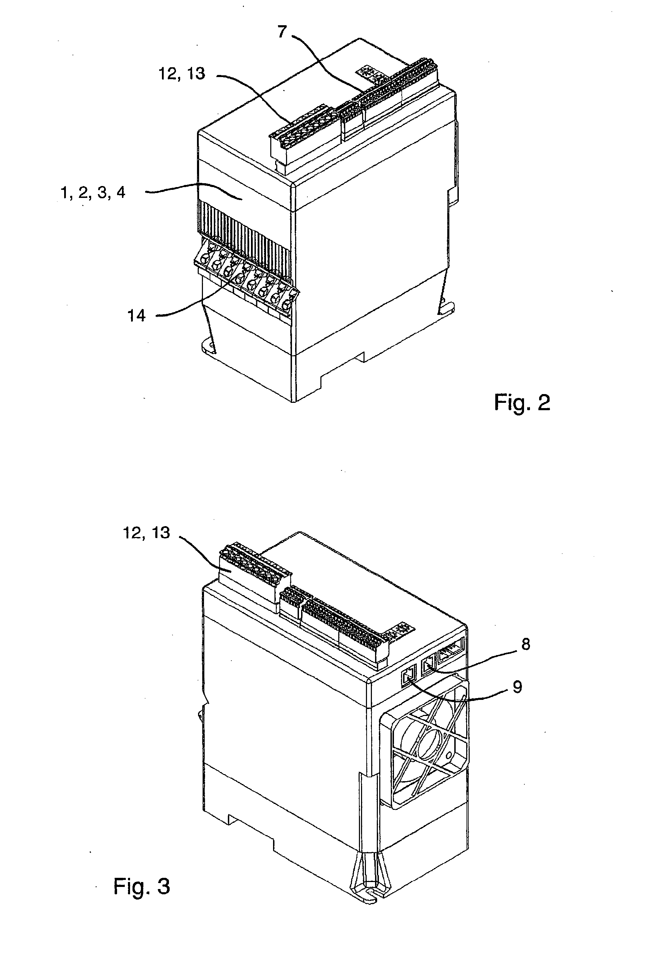

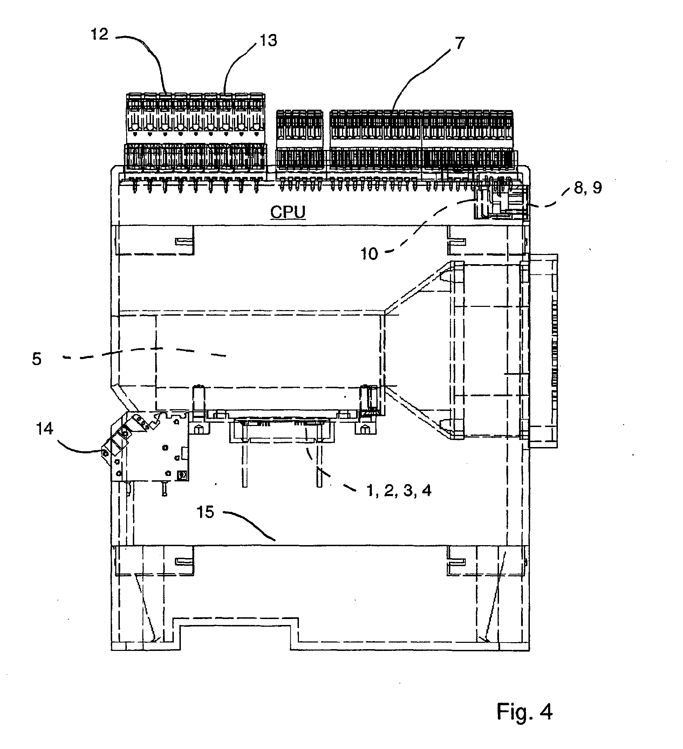

Some terminal boards 14 for the connection to electric loads regulated by the controlled power supply and a driven load electric parameter sensing board 15 can be also seen in figures 3 and 4.

The board 15 sends the detected data to the central unit CPU and the latter exchanges data with the interface 10 and it sends the control signals to the power unit solid state relays 1, 2, 3 and 4.

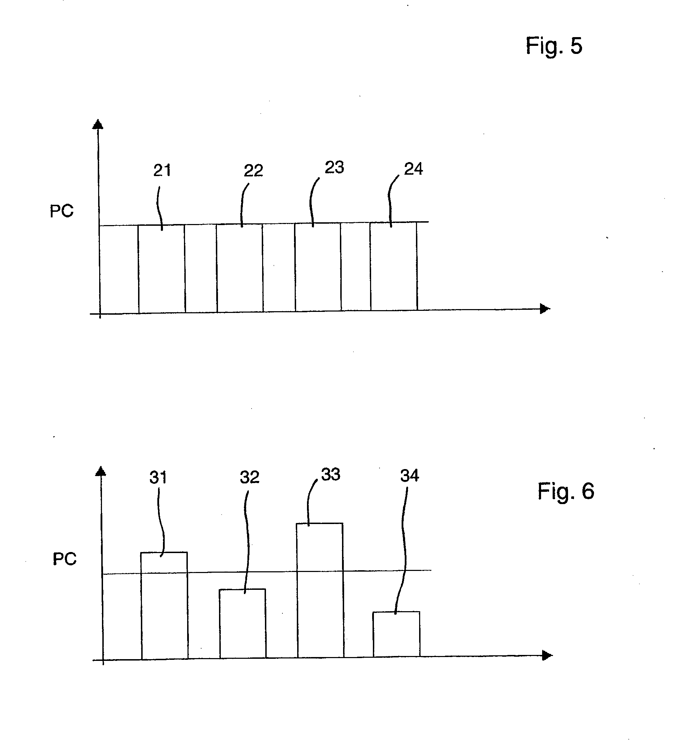

Figure 5 is a diagram of the power supplied to the loads indicated with 21, 22, 23 and 24 having a balanced absorption and an average power PC . The supplied power is PCx4, i.e. the highest nominal power of the power regulator whereto the dissipator 5 and each solid state relay 1, 2, 3 and 4 are sized.

Figure 6 is a diagram of the power supplied to the loads indicated with 31, 32, 33 and 34 having a different absorption. The supplied power does not exceed PCx4, i.e. the nominal power. Some loads, for example the ones indicated with 31 and 33, considering the higher power at which solid state relays can operate, have higher powers than PC, while other loads, indicated with 32 and 34, have lower powers. However the total of the supplied powers does not exceed the nominal power PCx4.

The control module CPU, the interface board 10 and the electric parameter sensing board 15 are single and shared when used to connect the power units to the process control logic units.

In fact, when driven loads have the same absorption, as shown in figure 5, the power supplied on each load is limited to the nominal power divided by the number of the existing and active loads. While, in case of different absorption between the loads, as it can be seen in figure 6, the instantaneous total of the power supplied on the loads is limited to the nominal power, but the power on some loads can be higher than the average power PC and meanwhile on the remaining loads the supplied power must be lower than the average power.

The achievable advantages result in a sizing of the power module being limited to a single dissipator for the nominal power and to the four solid state relays so that each one can support by itself the nominal power, while the control module CPU is not correlated to the value of the power involved in the power module and it also controls all solid state relays so to always use the nominal power even when some loads do not require any power or in a limited way while some others require more power.

The compensation of the supplied instantaneous powers thus allows the power supply to be managed by a single device, which, in the simplest embodiment thereof, can even comprise only two solid state relays, thus capable of powering two independent loads.

The best advantages, compensating the power module structural complexity with several solid state relays and the possible reciprocal compensation between the powers supplied on the loads, are obtained by the shown configuration of four solid state relays, i.e. to power four different electric loads, and a single control module with logic control and interface units with the control board of the machine wherein said regulator is installed.

Obviously, aiming at meeting specific and incidental requirements, a skilled in the art will be able to bring several changes to the above-described regulator of the power supplied to industrial process electric loads, all comprised, however, within the scope of protection of the present invention as defined by the following claims.

## Claims

1. A regulator of the power supplied to industrial process electric loads comprising a power module and a control module; the power module comprising a solid-state switching relay (1) associated to a heat dissipator (5) and the control module comprising a Programmed Logic Controller or PLC in order to control the corresponding electric load switching relay; said control module being connected to different sensors required for the industrial process correct operation,
wherein the power module houses at least two or more solid state relays (1, 2, 3, 4 individually controlled by a central logic unit of the Programmed Logic Controller (CPU) in order to power different electric loads, **characterized in that** all solid state relays (1, 2, 3, 4) are physically associated to the same heat dissipator (5) and the regulator of the power is configured such that:
- said different electric loads have different load cycles from each other and different power absorption and,
- the instantaneous total of the power supplied on the loads is limited to a nominal power of the regulator which is the sum of the nominal powers (PC) of all individual-solid state relays (1, 2, 3, 4) associated to the same heat dissipator (5) and,
- the highest power (31, 32) which can be supplied individually by each of said solid state relays (1, 2, 3, 4) exceeds its nominal power.

2. A power regulator according to the preceding claim, **characterised in that** it comprises four solid state relays (1, 2, 3, 4) housed in the power module and controlled by the centrale logic unit (CPU).

3. A power regulator according to claim 1, **characterised in that** the overall nominal power supplied to electric loads by the power module corresponds to the total of the powers supplied by each of said solid state relays (1, 2, 3, 4).

4. A power regulator according to claim 1, **characterised in that** at least one of the relays (1, 2, 3, 4) incorporated in the power module can supply an electric power corresponding to the regulator nominal power.

## Patentansprüche

1. Regler der elektrischen Industrieprozesslasten zugeführten Energie, der ein Leistungsmodul und ein Steuermodul aufweist; wobei das Leistungsmodul ein Festzustandschaltrelais (1) aufweist, das einem Wärmedissipator (5) zugeordnet ist, und das Steuermodul einen programmierten Logikcontroller oder PLC aufweist, um das entsprechende elektrische Lastschaltrelais anzusteuern; wobei das Steuermodul mit verschiedenen Sensoren verbunden ist, die für den korrekten Betrieb des Industrieprozesses erforderlich sind,
worin das Leistungsmodul zumindest zwei oder mehr Festzustandrelais (1, 2, 3, 4) aufnimmt, die von einer zentralen Logikeinheit des programmierten Logikcontrollers (CPU) einzeln angesteuert werden, um unterschiedliche elektrische Lasten zu versorgen,
**dadurch gekennzeichnet, dass** alle Festzustandrelais (1, 2, 3, 4) dem selben Wärmedissipator (5) physisch zugeordnet sind und der Energieregler derart konfiguriert ist, dass:
die unterschiedlichen elektrischen Lasten voneinander unterschiedliche Lastzyklen und unterschiedliche Energieabsorption haben, und
- die momentane Gesamtheit der den Lasten zugeführten Energie auf eine Nennleistung des Reglers begrenzt ist, welche die Summe der Nennleistungen (PC) aller einzelnen Festzustandrelais (1, 2, 3, 4) ist, welche dem gleichen Wärmedissipator (5) zugeordnet sind, und
- die höchste Leistung (31, 32), die von jedem der Festzustandrelais (1, 2, 3, 4) einzeln zugeführt werden kann, deren Nennleistung überschreitet.

2. Energieregler nach dem vorangehenden Anspruch, **dadurch gekennzeichnet, dass** er vier Festzustandrelais (1, 2, 3, 4) aufweist, die in dem Leistungsmodul untergebracht sind und von der zentralen Logikeinheit (CPU) angesteuert werden.

3. Energieregler nach Anspruch 1, **dadurch gekennzeichnet, dass** die gesamte Nennleistung, die von dem Leistungsmodul elektrischen Lasten zugeführt wird, der Gesamtheit der Leistungen entspricht, die von jedem der Festzustandrelais (1, 2, 3, 4) zugeführt wird.

4. Energieregler nach Anspruch 1, **dadurch gekennzeichnet, dass** zumindest eines der in dem Leistungsmodul untergebrachten Relais (1, 2, 3, 4) eine der Reglernennleistung entsprechende elektrische Energie zuführen kann.

## Revendications

1. Régulateur de puissance fournie à des charges électriques de processus industriels qui comprend un module d'alimentation et un module de commande, ledit module d'alimentation comprenant un relais de commutation à semi-conducteurs (1) associé à un dissipateur thermique (5), et ledit module de commande comprenant un contrôleur logique programmé (PLC) destiné à contrôler le relais de commutation de charge électrique correspondant, ledit module de commande étant relié à différents capteurs nécessaires au bon fonctionnement desdits processus industriels, dans lequel ledit module d'alimentation contient au moins deux relais à semi-conducteurs (1, 2, 3, 4) contrôlés individuellement par une unité logique centrale dudit contrôleur logique programmé (CPU) afin d'alimenter différentes charges électriques, **caractérisé en ce que** tous les relais à semi-conducteurs (1, 2, 3, 4) sont physiquement associés au même dissipateur thermique (5), et **en ce que** ledit régulateur de puissance est configuré de sorte que :
- lesdites différentes charges électriques possèdent des cycles de charge différents et une absorption de puissance différente, et
- la puissance totale instantanée fournie auxdites charges soit limitée à une puissance nominale dudit régulateur, qui correspond à la somme des puissances nominales (PC) de tous les relais à semi-conducteurs (1, 2, 3, 4) associés au même dissipateur thermique (5), et
- la puissance la plus élevée (31, 32) qui peut être fournie individuellement par chacun desdits relais à semi-conducteurs (1, 2, 3, 4) dépasse sa puissance nominale.

2. Régulateur de puissance selon la revendication précédente, **caractérisé en ce qu'**il comprend quatre relais à semi-conducteurs (1, 2, 3, 4) contenus dans ledit module d'alimentation et contrôlés par ladite unité logique centrale (CPU) .

3. Régulateur de puissance selon la revendication 1, **caractérisé en ce que** la puissance nominale totale fournie auxdites charges électriques par ledit module d'alimentation correspond au total des puissances fournies par chacun desdits relais à semi-conducteurs (1, 2, 3, 4).

4. Régulateur de puissance selon la revendication 1, **caractérisé en ce qu'**au moins l'un desdits relais (1, 2, 3, 4) intégrés audit module d'alimentation peut fournir une puissance électrique correspondant à la puissance nominale dudit régulateur.
